# EUROPEAN PATENT APPLICATION

(11) **EP 3 878 535 A1**
(43) Date of publication of application: **15.09.2021**
(21) Application number: 20461521.5
(22) Date of filing: 13.03.2020
(51) Int. Cl.: B01D 27/08, F25B 39/04, F25B 43/00, B01D 53/26

(54) **A RECEIVER DRYER**

(71) Applicant: Valeo Autosystemy SP. Z.O.O., 32-050 Skawina (PL)
(72) Inventor: INDYKA, Michal, 32 050 SKAWINA (PL); LAS, Piotr, 32 050 SKAWINA (PL)
(74) Representative: Bialkowski, Adam

(57) **Abstract**

A receiver dryer (100) includes a tubular casing (10), a filter-plug assembly (20) and a desiccant bag (30). The filter-plug assembly (20) includes a plug body (22) that closes a proximal end of the tubular casing (10) and a filter body (24) that is received inside the tubular casing (10) and is disposed over the plug body (22). The filter body (24) includes side elements (24a) that support a filter element and define a filter cavity (24b). The cross sectional dimension of the desiccant bag (30) is comparatively smaller than internal dimension at an entrance (24c) to the filter cavity (24b). The filter-plug assembly includes at least one support element (26) that extends radially to reduce size of gaps at the entrance (24c) of the filter cavity (24b), thereby supporting the desiccant bag (30) over the at least one support element (26).

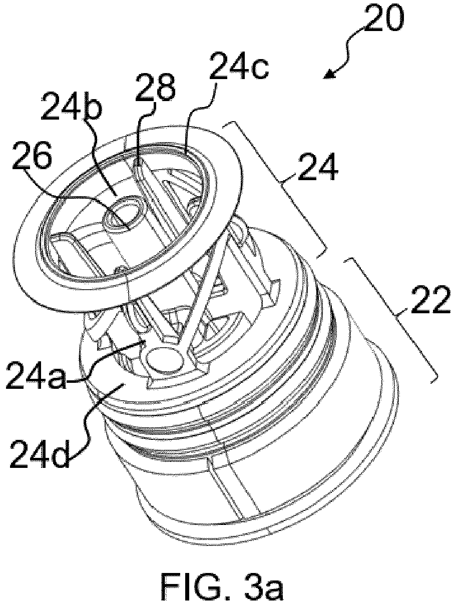

## Description

The present disclosure relates to a receiver dryer for a vehicle air conditioning system, particularly, the present disclosure relates to a filter plug assembly for a receiver dryer for a condenser of a vehicle air conditioning system.

Conventional air conditioning system for example for a vehicle cabin includes a condenser, an evaporator, an expansion device, a compressor and a heater. The conventional air conditioning system configured with expansion valves are also configured with a receiver dryer that is disposed in the high-pressure section of the air conditioning system, usually located between condenser and expansion valve in the air conditioning loop. The receiver dryer acts as a temporary storage for refrigerant (and oil). The receiver dryer receives a desiccant material to absorb moisture (water) that may have entered inside the air conditioning system. The receiver dryer also includes a filter in the form of a flexible mesh mounted over a filter body **2** that facilitates spreading of the filter mesh to trap debris that may be inside the air conditioning system. A filter plug assembly **1** is generally disposed at a bottom of the receiver dryer and is connected thereto by a threaded connection. If the receiver dryer does not properly retain the moisture and / or debris, the moisture and/or debris can reach critical elements of the air conditioning system, particularly the compressor, which can be detrimental to the performance of the compressor and cause damage to the compressor which is an expensive component.

The filter body **2** of the filter-plug assembly **1** includes a plurality of upstanding side elements **2a** arranged along a closed profile to define a support structure with openings disposed along the periphery and open at the top by an opening. The support structure supports a filter element, specifically a flexible filter mesh in a deployed configuration and also defines a filter cavity **2c,** wherein the open top of the support structure acts as an entrance **2b** of the filter cavity **2c.** Generally, a desiccant bag **4** is disposed inside a tubular casing of the receiver dryer and over the filter body **2,** wherein internal dimension of the entrance **2b** to the filter cavity **2c** is smaller than cross section of the desiccant bag **4** to prevent falling of the desiccant bag **4** in the filter cavity **2c.** However, in some cases, the receiver dryer is required to have a larger internal volume, and one of the convenient ways of increasing the internal volume is by increasing receiver dryer diameter. However, increasing the receiver dryer diameter causes the filter body **2** to be larger. On increasing the diameter of the filter body **2,** the filter cavity **2c** becomes larger than the cross sectional dimension of the desiccant bag **4.** With such configuration of the filter cavity **2c,** there are chances that the desiccant bag **4** may fall inside the filter cavity **2c,** thereby clogging the filter body **2** and particularly, the filter of the filter body **2.** The clogging of the filter body **2** in turn causes several problems such as increase in internal pressure drop and disruption of flow of refrigerant to a sub-cooling section of the condenser, thereby adversely affecting efficiency and performance of the condenser.

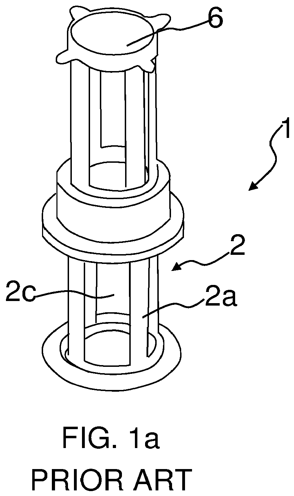

Aimed at preventing falling of the desiccant bag **4** in the filter cavity **2c** and preventing clogging of the filter body **2,** few prior art suggests configuring a support platform **6** above and spaced away from the entrance of the filter cavity **2c** to support the desiccant bag thereon. **FIG. 1a** illustrates a schematic representation of the support platform **6** disposed over the filter body **2** in accordance with the prior art. The support platform **6** is configured spaced away from the entrance of the filter cavity **2c** and prevents increase in internal pressure drop caused by clogging of the filter body **2,** particularly, clogging of the filter of the filter body **2.** However, forming such additional support platform **6** above and spaced away from the entrance of the filter cavity **2c** to support the desiccant bag **4** increases the overall manufacturing costs.

Other prior art suggest integrally forming a positioning pin **8** with the filter plug assembly **1,** particularly, the filter body **2.** The positioning pin **8** extends outward from base of the filter body **2** and supports the desiccant bag **4** away from the entrance of the filter cavity **2c.** Such configuration of the positioning pin **8** is aimed at preventing falling of the desiccant bag **4** in the filter cavity **2c** even when the cross sectional dimension "d" of the descant bag **4** is smaller than internal dimension "D" of the filter cavity **2c.** The positioning pin **8** generally extends from the base to at least the extreme ends of the upstanding side elements **2a.** Such configuration is aimed at maintaining the desiccant bag **4** above the filter body **2** and prevent clogging of the filter body **2.** Although such configuration of the filter body **2** with the positioning pin **8** do not require additional element and do not increase the overall manufacturing cost, such arrangement of the positioning pin **8** within the filter cavity **2c** fails to address the problem of the desiccant bag **4** falling through annular gap around the positioning pin **8.** More specifically, in case of small sized desiccant bag **4,** play of the desiccant bag **4** inside the tubular casing may cause the desiccant bag **4** to move to such orientation or position within the tubular casing that the desiccant bag **4** can slip through annular gap between the upstanding side elements **2a** and the positioning pin **8.** In case the desiccant bag **4** falls through annular gap around the positioning pin **8,** the desiccant bag **4** is received closer to the filter of the filter body **2** and is more likely to clog the filter of the filter body **2.** As a result the positioning pin **8** may cause more harm than good in preventing clogging of the filter of the filter body. Accordingly, such conventional arrangements fail to address the problems such as increase in internal pressure drop across the receiver dryer, clogging of the filter of the filter body and inefficient performance of the condenser due to disruption of flow to sub-cooling section of the condenser caused by clogging of the filter body.

Accordingly, there is a need for a receiver dryer and a filter plug assembly therefor that obviates drawbacks associated with conventional arrangements for preventing falling of the desiccant bag in the filter cavity and preventing clogging of the filter body. Further, there is a need for a receiver dryer and a filter plug assembly therefor that prevents falling of the desiccant bag in the filter cavity and clogging of the filter body without requiring additional elements and without increasing the overall manufacturing costs. Furthermore, there is a need for a receiver dryer and a filter plug assembly therefor that prevents desiccant bag from falling in the filter cavity and prevents clogging of the filter body under all conditions, irrespective of cross-sectional shape, size, position and orientation of the desiccant bag inside the tubular casing. Further, there is a need for a receiver dryer and a filter plug assembly therefor that is so configured that internal pressure drop across the receiver dryer is decreased and efficiency and performance of the condenser is enhanced.

An object of the present invention is to provide a receiver dryer and a filter plug assembly therefor that prevents falling of the desiccant bag in the filter cavity and preventing clogging of the filter body.

Another object of the present invention is to provide a receiver dryer and a filter plug assembly therefor that obviates drawbacks associated with conventional arrangements for preventing falling of the desiccant bag in the filter cavity and preventing clogging of the filter body.

Yet another object of the present invention is to provide a receiver dryer and a filter plug assembly therefor that does not require additional elements to prevent falling of the desiccant bag in the filter cavity and prevents clogging of the filter body.

Another object of the present invention is to provide a receiver dryer and a filter plug assembly therefor that prevents desiccant bag from falling in the filter cavity and prevents clogging of the filter body under all conditions, irrespective of cross sectional shape, size, position and orientation of the desiccant bag inside the tubular casing.

Still another object of the present invention is to provide a receiver dryer and a filter plug assembly therefor that involves comparatively fewer parts, lesser inventory, reduced inventory costs and manufacturing costs associated with manufacturing thereof as compared to conventional filter plug assembly.

Yet another object of the present invention is to provide a receiver dryer and a filter plug assembly therefor that is simple in construction and easier to manufacture.

Another object of the present invention is to provide a receiver dryer and a filter plug assembly therefor that is so configured that the internal pressure drop across the receiver dryer is decreased and efficiency and performance of the condenser is enhanced.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A receiver dryer for a condenser of a vehicle is disclosed in accordance with an embodiment of the present invention. The receiver dryer includes a tubular casing, a filter-plug assembly and a desiccant bag. The filter-plug assembly includes a plug body and a filter body. The plug body closes a proximal end of the tubular casing. The filter body is received inside the tubular casing and is disposed over the plug body. The filter body includes a plurality of side elements that supports a filter element in a deployed configuration and defines a filter cavity. The desiccant bag is disposed inside the tubular casing and over the filter body, cross sectional dimension of the desiccant bag is comparatively smaller than internal dimension at an entrance of the filter cavity. The filter-plug assembly includes at least one support element that extends radially to reduce size of gaps at entrance of the filter cavity, thereby supporting the desiccant bag over the at least one support element.

Generally, the at least one support element includes at least one of a first support element and a plurality of second support elements, the first support element axially extends at least up to the entrance of the filter cavity and also radially extends outwardly from an interior of the filter cavity, whereas at least one of the second support elements radially extend from a portion of at least one of the first support element and the side elements at the entrance of the filter cavity.

In accordance with an embodiment, the at least one support element includes the first support element.

Alternatively, the at least one support element includes the plurality of second support elements.

In accordance with a yet another embodiment, the at least one support element includes the first support element and the plurality of second support elements.

Preferably, at least one of the second support elements radially extends from a portion of at least one of the support element and the side elements at the entrance of the filter cavity.

Generally, at least one of the second support elements extends radially inward from the portion of the at least one side element at the entrance of the filter cavity.

Alternatively, at least one of the second support elements extends radially outward from the portion of the support element at the entrance of the filter cavity.

In accordance with another embodiment of the present invention, at least one of the second support elements includes two portions extending towards each other, wherein a first portion extends radially inward from the portion of the at least one side element at the entrance of the filter cavity and a second portion extends radially outward from the portion of the support element at the entrance of the filter cavity, the first portion and the second portion are aligned or angularly offset with respect to each other.

Generally, the first support element axially extends from a base of the filter body to at least up to extreme ends of the side elements.

Further, at least one of the first support element and the second support elements is either integrally formed with the filter body or detachably secured to the filter body.

Particularly, the first support element is hollow with internal spacing between opposing walls thereof and annular spacing between the first support element and the side elements at any section along periphery of the first support element is smaller than cross sectional dimension of the desiccant bag.

Alternatively, the first support element is of a cross-shaped section.

Generally, at least one of the first support element and at least one second support element is extensible.

Specifically, at least one of the first support element and at least one second support element is adjustable in height and cross section based on ratio of cross-sectional dimension of the desiccant bag to internal dimension of the filter cavity.

Further, extreme end of the first support element is configured with smooth edges to prevent damage to the desiccant bag interacting therewith.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIG. 1a** illustrates a schematic representation of a filter plug assembly configured with a first prior art arrangement to prevent falling of a desiccant bag inside a filter cavity;
**FIG.1b** illustrates a schematic representation of a filter plug assembly configured with another prior art arrangement to prevent falling of a desiccant bag inside a filter cavity;
**FIG. 1c** illustrates a top view of the filter plug assembly of **FIG. 1b****,** wherein a desiccant bag is depicted slipping through a gap formed between a positioning pin and side elements defining the filter cavity and falling in the filter cavity;
**FIG. 2a** illustrates an isometric view of a receiver dryer in accordance with an embodiment of the present invention;
**FIG. 2b** illustrates an isometric view of the receiver dryer of **FIG. 2a** without the tubular casing to depict internal details of the receiver dryer;
**FIG. 2c** illustrates a sectional view of the receiver dryer of **FIG. 2a** to depict internal details of the receiver dryer;
**FIG. 3a** illustrates an isometric view of a filter plug assembly in accordance with an embodiment of the present invention configured in the receiver dryer of **FIG 2a** - **FIG. 2c****,** the filter plug assembly is provided with an arrangement to prevent falling of a desiccant bag inside a filter cavity;
**FIG. 3b** illustrates a top view of the filter plug assembly configured with the arrangement of **FIG 3a****,** wherein the desiccant bag is depicted supported by a first support element and at least one of the plurality of second support elements and is prevented from falling in the filter cavity;
**FIG. 4a** illustrates a top view of a filter plug assembly configured with an arrangement to prevent falling of a desiccant bag inside a filter cavity in accordance with another embodiment of the present invention; and
**FIG. 4b** illustrates a top view of a filter plug assembly configured with an arrangement to prevent falling of a desiccant bag inside a filter cavity in accordance with yet another embodiment of the present invention.

It must be noted that the figures disclose the invention in a detailed enough way to be implemented, said figures helping to better define the invention if needs be. The invention should however not be limited to the embodiment disclosed in the description.

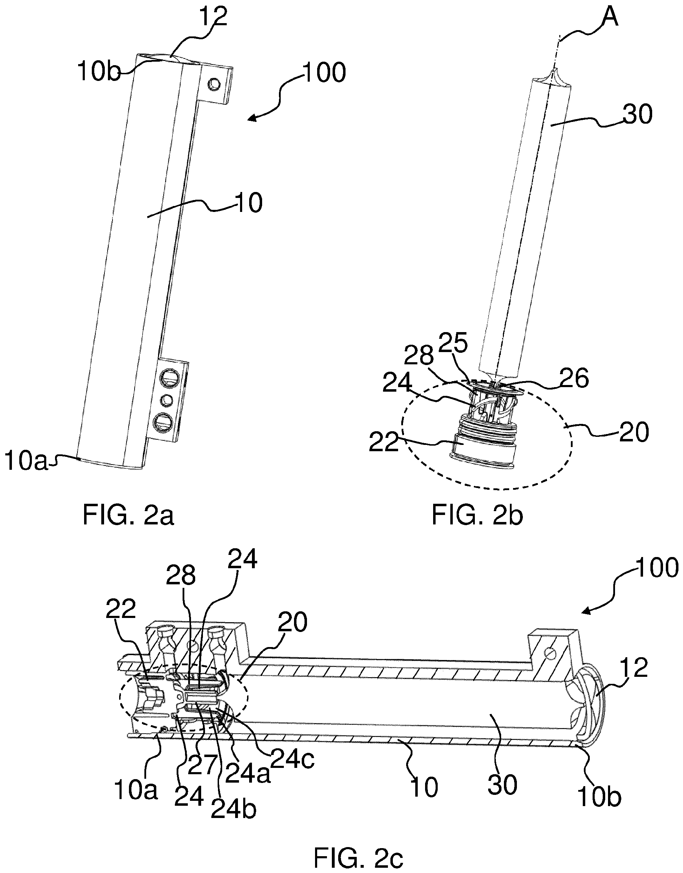

The present disclosure envisages a receiver dryer. The receiver dryer includes a tubular casing, a filter plug assembly and a desiccant bag. The filter plug assembly includes a filter body and a plug body. The filter body is received inside the tubular casing and the plug body closes a proximal end of the tubular casing. The filter body entraps debris, whereas the desiccant material entraps moisture, thereby preventing debris and moisture from being carried forward to the other elements disposed in the air-conditioning loop, such as the compressor and preventing damage thereto. The filter body includes side elements to support a filter mesh in a deployed configuration and defines a filter cavity. The cross sectional dimension "c" of the desiccant bag is comparatively smaller than an internal dimension of the filter cavity at an entrance of the filter cavity. Specifically, the cross sectional dimension "c" of the desiccant bag **30** is smallest dimension at a section that is at right angle to a central axis "A" of the desiccant bag, the central axis "A" is depicted in **FIG. 2****.** The filter plug assembly includes at least one support element that includes at least one of a first support element and a plurality of second support elements that are so configured that size of any gap formed at the entrance to the filter cavity is smaller than cross sectional dimension of the desiccant bag. More specifically, the first support element is hollow with internal gap between opposing walls thereof smaller than cross sectional dimension of the desiccant bag. Further, the second support elements are so disposed in the annular gap between the first support element and the side-elements at any section along periphery of the support element that the second support elements act as blocking elements to prevent desiccant bag from falling in the filter cavity and prevent clogging of the filter body under all conditions. Particularly, the first support element and the second support elements are of such configuration and so positioned inside the filter cavity that the falling of the desiccant bag in the filter cavity is prevented even if the desiccant bag moved inside the tubular casing, irrespective of cross-sectional, shape, dimension, orientation and position of the desiccant bag inside the tubular casing. Although, the present invention in the forthcoming description and the accompanying drawings is explained with example of the receiver dryer and a filter plug assembly therefor. However, the present invention is also applicable for any device used in any other application, wherein a heavier bag is required to be received inside a tubular casing and supported over a hollow element that is also received in the tubular casing, wherein hollow element is of internal dimension larger than cross section of the bag and the heavier bag is required to be held above and spaced from an entrance of the hollow element to prevent clogging thereof.

Referring to **FIG. 1a****,** a filter plug assembly **1** to be disposed inside a tubular casing of a receiver dryer is illustrated. The filter plug assembly **1** is configured with a prior art arrangement to prevent a desiccant bag (not illustrated in **FIG. 1a**) received in the tubular casing and disposed above the filter plug assembly **1** from falling in a filter cavity **2c** defined by upstanding side elements **2a** of a filter body **2** of the filter plug assembly **1.** The prior art arrangement includes a support platform **6** disposed over and spaced away from the filter body 2. Although, the support platform **6** prevents desiccant bag from falling in the filter cavity and prevents clogging of the filter body **2,** such prior art arrangement involves use of an additional element to achieve the above object, thereby increasing the overall manufacturing costs associated with the manufacturing of the filter plug assembly **1.**

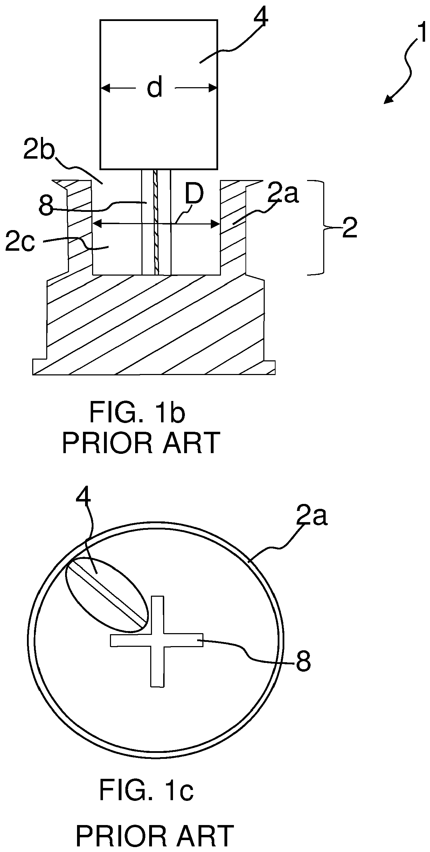

**FIG.1b** illustrates a schematic representation of a filter plug assembly **1** configured with another prior art arrangement to prevent falling of a desiccant bag **4** inside a filter cavity **2c.** The second prior art arrangement includes a positioning pin **8** that extends outward from a base of a filter body **2** and supports the desiccant bag **4** away from an entrance **2b** of the filter cavity **2c.** Although such configuration of the filter body **2** prevents falling of the desiccant bag **4** inside the filter cavity **2c** and prevents clogging of the filter body **2** without requiring additional elements and without increasing the overall manufacturing cost, such arrangement of the positioning pin **8** within the filter cavity **2c** is not full proof and sometimes fails to address the problem of the desiccant bag **4** falling in the filter cavity **2c** and clogging the filter body **2.** In some cases for example, the small sized desiccant bag **4** is displaced to such an orientation or position within the tubular casing that the desiccant bag **4** can slip through gaps between a plurality of upstanding side elements **2a** and the positioning pin **8** as illustrated in **FIG. 1c** and clog the filter body **2.** In case the desiccant bag **4** falls through annular gap around the positioning pin **8,** the desiccant bag **4** is received closer to the filter of the filter body **2** and is more likely to clog the filter of the filter body **2.** As a result the positioning pin **8** may cause more harm than good in preventing clogging of the filter of the filter body. Accordingly, such conventional arrangement fails to prevent clogging of the filter body **2,** particularly, the filter of the filter body **2** and hence fails to address the problems arising due to filter clogging. More specifically, the conventional arrangement fails to address issues such as increase in internal pressure drop across the receiver dryer and inefficient performance of the condenser due to disruption of fluid flow to sub-cooling section of the condenser caused by clogging of the filter body.

The present invention envisages a receiver dryer **100** in accordance with an embodiment of the present invention. The receiver dryer **100** of the present invention is for a condenser of a vehicle. The receiver dryer **100** includes a tubular casing **10,** a filter-plug assembly **20** and a desiccant bag **30.** The filter-plug assembly **20** includes a plug body **22** and a filter body **24.**

Referring to **FIG. 2a** and **FIG. 2b** of the accompanying drawings, the tubular casing **10** includes a proximal end **10a** and a distal end **10b.** The proximal end **10a** of the tubular casing **10** includes internal threads formed thereon that are complimentary to external threads formed on the plug body **22** of the filter plug assembly **20** to enable threaded engagement between the proximal end **10a** of tubular casing **10** and the filter-plug assembly **20.** Although the proximal end **10a** of the tubular casing **10** of the receiver dryer **100** is connected to the filter-plug assembly **20** by threaded engagement, present invention is not limited to any particular configuration of connection between the proximal end **10a** of the tubular casing **10** and the filter-plug assembly **20** and any type of connection can be formed between these elements. The filter-plug assembly **20** further includes sealing elements disposed between the filter-plug assembly **20** and the proximal end of the tubular casing **10** to form sealing connection between the filter-plug assembly **20** and the tubular casing **10.** The distal end **10b** of the tubular casing **10** is closed by a closable lid **12.**

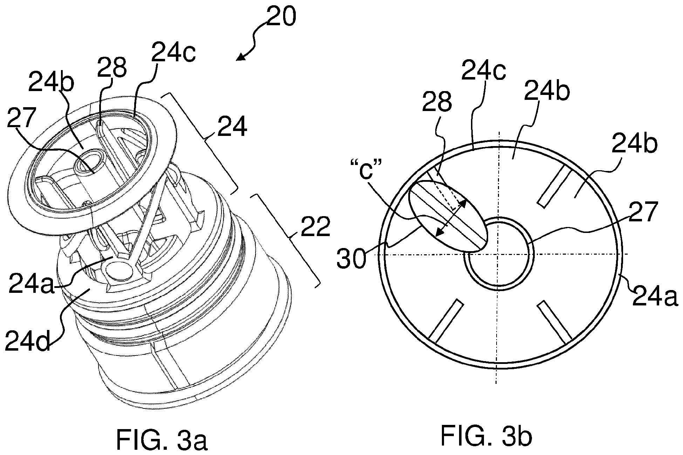

The plug body **22** of the filter-plug assembly **20** closes the proximal end **10a** of the tubular casing **10.** The filter body **24** is received inside the tubular casing **10** and is disposed over the plug body **22.** In accordance with an embodiment of the present invention, the plug body **22** is connected to the filter body **24.** In accordance with another embodiment of the present invention, the plug body **22** and the filter body **24** are integrally formed as a single piece by a one-step moulding process. The filter body **24** includes a plurality of side elements **24a** that supports a filter element thereon in a deployed configuration and define a filter cavity **24b.** In the deployed configuration, the filter is disposed in a spread out configuration efficient filtration. The filter body **24** further includes a lip **25** configured at the extreme ends of the side elements **24a.** The extreme ends of the side elements **24a,** particularly, the lip **25** formed thereon defines an entrance **24c** of the filter cavity **24b** and also configures sealing interaction with inside walls of the tubular casing **10.** The desiccant bag **30** is received in the tubular casing **10** and is disposed above the filter-plug assembly **20.** The cross sectional dimension of the desiccant bag **30** is comparatively smaller than internal dimension at the entrance **24c** of the filter cavity **24b.** The cross sectional dimension "c" of the desiccant bag **30** as depicted in **FIG. 3b** is smallest dimension at a section that is at right angle to a central axis "A" of the desiccant bag **30,** the central axis "A" is depicted in **FIG.2b****.** In order to prevent the desiccant bag **30** from falling inside the filter cavity **24b** and clogging the filter body **24,** the filter-plug assembly **20** includes at least one support element **26.** The at least one support element **26** supports the desiccant bag **30** thereon.

The at least one support element **26** extends radially to reduce size of gaps at the entrance **24c** of the filter cavity **24b,** thereby supporting the desiccant bag **30** thereon. The at least one support element **26** includes at least one of a first support element **27** and a plurality of second support elements **28.** The first support element **27** axially extends at least up to the entrance **24c** of the filter cavity **24b** and radially extends outwardly from an interior of the filter cavity **24b.** The at least one of the second support elements **28** radially extends from a portion of at least one of the first support element **27** and the side elements **24a** at the entrance **24c** of the filter cavity **24b.** The first support element **27** is capable of bearing the weight of the desiccant bag **30,** whereas the plurality of second support elements **28** is capable of blocking the entry of the desiccant bag **30** inside the filter cavity **24b.** Accordingly, the first support element **27** should exhibit sufficient strength. To impart strength to the first support element **27,** the first support element **27** protrudes from a base **24d** of the filter body **24** and extends at least up to the entrance **24c** of the filter cavity **24b,** also the first support element **27** extends radially outward from interior of the filter cavity **24b.** In accordance with an embodiment of the present invention, the first support element **27** is hollow. The internal gap between opposing walls of the first support element **27** and annular gap between the first support element **27** and the side-elements **24a** at any section along periphery of the first support element **27** is smaller than cross sectional dimension "c" of the desiccant bag **30.** Alternatively, the first support element **27** is of a cross-shaped section such that gap between any section of the first support element **27** and the side elements **24a** is smaller than the cross sectional dimension "c" of the desiccant bag **30.** Such configuration of the filter body **24** prevents falling of the desiccant bag **30** inside the filter cavity **24b** and prevents clogging of the filter body **24** by the desiccant bag **30,** specifically, prevents clogging of the filter of the filter body **24.**

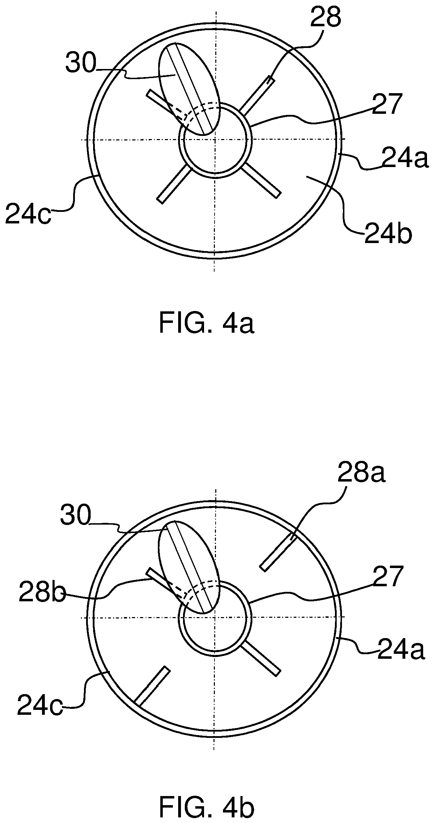

Further, the plurality of second support elements **28** blocks the annular gap between the first support element **27** and the side-elements **24a** at any section along periphery of the first support element **27** to prevent falling of the desiccant bag **30** inside the filter cavity **24b** through the annular gap. Generally, the second support elements **28** extend radially inward from the portion of the at least one side elements **24a** at the entrance of the filter cavity **24b** as illustrated in **FIG. 3b****.** Alternatively, the at least one second support element **28** extend radially outward from the portion of the first support element **27** at the entrance of the filter cavity **24b** as illustrated in **FIG. 4a****.** In accordance with another embodiment of the present invention, at least one of the second support elements **28** includes two portions disposed opposite to and extending towards each other. Specifically, a first portion **28a** extends radially inward from the portion of the at least one side elements **24a** at the entrance of the filter cavity **24b** and a second portion **28b** extends radially outward from the portion of the first support element **27** towards the first portion **28a** at the entrance of the filter cavity **24b.** In one example, the first portion **28a** and the second portion **28b** are aligned with respect to each other. In accordance with another example, refer **FIG. 4b****,** the first portion **28a** and the second portion **28b** are at an angular offset with respect to each other. In accordance with an embodiment of the present invention, the second support elements **28** are disposed at uniform angular spacing with respect to each other along the entrance **24c** of the filter cavity **24b.** In accordance with another embodiment, the second support elements **28** are at non-uniform angular spacing with respect to each other along the entrance **24c** of the filter cavity **24b.** The second support elements **28** extend inwardly from the portion of the at least one side elements **24a** at the entrance of the filter cavity **24b.** However, the present invention is not limited to any particular configuration, placement and number of the second support elements **28** as far as the second support elements **28** either alone or in conjunction with the first support element **27** blocks the annular gap between the first support element **27** and the side-elements **24a** to prevent the desiccant bag **30** from falling inside the filter cavity **24b.** The first support element **27** and the second support elements **28** are so configured inside the filter cavity **24b** that these permit fluid flow across the entrance **24c** to the filter cavity **24b** but prevents falling of the desiccant bag **30** inside the filter cavity **24b.** The first support element **27** being centrally disposed inside the filter cavity **24b** and extending from the base **24d** of the filter body **24** stably supports the desiccant bag **30** thereon. The second support elements **28** configured along periphery of the entrance to the filter cavity **24b** blocks entry of the desiccant bag **30** inside the filter cavity **24b** through annular gap around the first support element **27.** As the second support elements **28** do not extend along the first support element **27,** the second support elements **28** do not hinder fluid flow through the filter of the filter body **24** and do not possess sufficient strength to withstand the load of the desiccant bag **30.** However, the second support elements **28** is capable of blocking entry of the desiccant bag **30** inside the filter cavity **24b.** Accordingly, the filter plug assembly **20** with the first support element **27** and the second support elements **28** attain a synergic effect of supporting the desiccant bag **30** and blocking entry of the desiccant bag **30** inside the filter cavity **24b** without hindering fluid flow through the filter of the filter body **24.**

Generally, the first support element **27** axially extends from the base **24d** of the filter body **24** to at least up to extreme ends of the side-elements **24a.** Further, the at least one of the first support element **27** and the second support elements **28** is integrally formed with the filter body **24.** The first support element **27** and the second support elements **28** are integrally formed along with the filter body **24** by a one-step moulding process. As such the receiver dryer **100** and the filter-plug assembly **20** therefor require comparatively fewer elements and process steps for manufacturing thereof, and as such is comparatively convenient and inexpensive to manufacture. In accordance with another embodiment, at least one of the first support element **27** and the second support elements **28** is detachably secured to the filter body **24.** Generally, at least one of the first support element **27** and at least one of the second support elements **28** is extensible. For example, either, the first support element **27** or at least one of the second support elements **28** is extensible. Alternatively, the first support element **27** and at least one of the second support elements **28** are extensible. Specifically, at least one of the first support element **27** and at least one of the second support elements **28** is adjustable in height and cross section based on ratio of cross-sectional dimension of the desiccant bag **30** to internal dimension of the filter cavity **24b.** Further, the extreme end of the at least one support element **26** is configured with smooth edges to prevent damage to the desiccant bag **30** interacting therewith.

Several modifications and improvement might be applied by the person skilled in the art to a receiver dryer and filter plug assembly therefor, as defined above,_and such modifications and improvements will still be considered within the scope and ambit of the present invention, as long as the receiver dryer includes a tubular casing, a filter-plug assembly and a desiccant bag. The filter-plug assembly includes a plug body and a filter body. The plug body closes a proximal end of the tubular casing. The filter body is received inside the tubular casing and is disposed over the plug body. The filter body includes a plurality of side elements that support a filter element in a deployed configuration and define a filter cavity. The desiccant bag is disposed inside the tubular casing and over the filter body, cross sectional dimension of the desiccant bag is comparatively smaller than internal dimension at an entrance of the filter cavity. The filter-plug assembly includes at least one support element that extends radially to reduce size of gaps at entrance of the filter cavity, thereby supporting the desiccant bag over the at least one support element.

## Claims

1. A receiver dryer (100) for a condenser of a vehicle, the receiver dryer (100) comprising
- a tubular casing (10);
- a filter-plug assembly (20) comprising:
• a plug body (22) adapted to close a proximal end (10a) of the tubular casing (10); and
• a filter body (24) received inside the tubular casing (10) and disposed over the plug body (22), the filter body (24) comprising a plurality of side elements (24a) adapted to support a filter element in a deployed configuration and define a filter cavity (24b); and
- a desiccant bag (30) disposed inside the tubular casing (10) and over the filter body (24), cross sectional dimension of the desiccant bag (30) being comparatively smaller than internal dimension at an entrance (24c) of the filter cavity (24b),
**characterized in that** the filter-plug assembly (20) comprises at least one support element (26) adapted to extend radially to reduce size of gaps at the entrance (24c) of the filter cavity (24b) thereby supporting the desiccant bag (30) on the at least one support element (26).

2. The receiver dryer (100) as claimed in the previous claim, wherein the at least one support element (26) comprises at least one of a first support element (27) and a plurality of second support elements (28), the first support element (27) adapted to axially extend at least up to the entrance (24c) of the filter cavity (24b) and also radially extend outwardly from an interior of the filter cavity (24b), whereas at least one of the second support elements (28) is adapted to radially extend from a portion of at least one of the first support element (27) and the side elements (24a) at the entrance (24c) of the filter cavity (24b).

3. The receiver dryer (100) as claimed in claim 2, wherein the at least one support element (26) comprises the first support element (27).

4. The receiver dryer (100) as claimed in claim 2, wherein the at least one support element (26) comprises the plurality of second support elements (28).

5. The receiver dryer (100) as claimed in claim 2, wherein the at least one support element (26) comprises the first support element (27) and the plurality of second support elements (28).

6. The receiver dryer (100) as claimed in any of claims 2-5, wherein at least one of the second support elements (28) extends radially inward from the portion of the at least one side elements (24a) at the entrance (24c) of the filter cavity (24b).

7. The receiver dryer (100) as claimed in any of claims 2-6, wherein at least one of the second support elements (28) extend radially outward from the portion of the first support element (27) at the entrance (24c) of the filter cavity (24b).

8. The receiver dryer (100) as claimed in any of claims 2-7, wherein at least one of the second support elements (28) comprises two portions extending towards each other, wherein:
∘ a first portion (28a) is adapted to extend radially inward from the portion of the at least one side element (24a) at the entrance (24c) of the filter cavity (24b); and
∘ a second portion (28b) is adapted to extend radially outward from the portion of the first support element (27) at the entrance (24c) of the filter cavity (24b), the first portion (28a) and the second portion (28b) are either aligned or angularly offset with respect to each other.

9. The receiver dryer (100) as claimed in any of the preceding claims, wherein the first support element (27) axially extends from a base (24d) of the filter body (24) to at least up to extreme ends of the side-elements (24a).

10. The receiver dryer (100) as claimed in any of the preceding claims, wherein at least one of the first support element (27) and the second support elements (28) is either integrally formed with the filter body (24) or detachably secured to the filter body (24).

11. The receiver dryer (100) as claimed in any of the preceding claims, wherein the first support element (27) is hollow with internal spacing between opposing walls thereof and annular spacing between the first support element (27) and the side-elements (24a) at any section along periphery of the first support element (27) is smaller than cross sectional dimension of the desiccant bag (30).

12. The receiver dryer (100) as claimed in any of the preceding claims, wherein the first support element (27) is of a cross-shaped section.

13. The receiver dryer (100) as claimed in any of the preceding claims, wherein at least one of the first support element (27) and at least one second support element (28) is extensible.

14. The receiver dryer (100) as claimed in any of the preceding claims, wherein at least one of the first support element (27) and at least one second support element (28) is adjustable in height and cross section based on ratio of cross-sectional dimension of the desiccant bag (30) to internal dimension of the filter cavity (24b).

15. The receiver dryer (100) as claimed in any of the preceding claims, wherein extreme end of the first support element (27) is configured with smooth edges to prevent damage to the desiccant bag (30) interacting therewith.
